# NEUE EUROPÄISCHE PATENTSCHRIFT

(11) **EP 0 555 420 B2**
(45) Veröffentlichungstag und Bekanntmachung des Hinweises auf die Entscheidung über den Einspruch: **17.12.2003**
(45) Hinweis auf die Patenterteilung: 12.03.1997
(21) Anmeldenummer: 92909041.3
(22) Anmeldetag: 29.04.1992
(51) Int. Cl.: C04B 7/47, F27D 15/02

(54) **VORRICHTUNG ZUR THERMISCHEN BEHANDLUNG VON SCHÜTTGÜTERN**
DEVICE FOR HEAT TREATMENT OF BULK MATERIALS
DISPOSITIF DE TRAITEMENT THERMIQUE DE MATERIAUX EN VRAC

(30) Priorität: 29.04.1991 DE 4114042
(43) Veröffentlichungstag der Anmeldung: 18.08.1993
(73) Patentinhaber: KHD Humboldt Wedag AG, 51105 Köln (DE)
(72) Erfinder: DITTMANN, Günter, O-4500 Dessau (DE)
(86) Internationale Anmeldenummer: DE9200344
(87) Internationale Veröffentlichungsnummer: WO92019560

(56) Entgegenhaltungen:
- EP-A- 0 219 745
- EP-A- 0 245 630
- US-A- 2 891 321
- Zement-Kalk-Gips, Nr.2, 1985, S.87-90

## Beschreibung

Die Erfindung betrifft eine Vorrichtung zur Kühlung von aus einem Brennofen austretenden heißen Zementklinder, nach dem Oberbegriff des Anspruchs 1.

Vorrichtungen dieser Art werden in der Steine- und Erden-Industrie verwendet, um das zuvor in einem Ofen gebrannte Gut (z. B. Zementklinker oder andere mineralische Güter) unmittelbar anschließend in der gewünschten Weise starkabzukühlen. Das aus dem Ofenauslauf kommende glühend heiße Gut soll in einer zum eigentlichen Kühler, in der Regel Schubrostkühler, Wanderrostkühler oder dergleichen, führenden und mit Kühlgas beaufschlagbaren Gutüberleiteinrichtung eine erste starke Abkühlung erfahren und dabei möglichst gut verteilt auf den nachgeschalteten Kühler weitergeleitet werden, auf dem dann die Hauptkühlarbeit geleistet wird, während das zu kühlende Gut in Längsrichtung weitertransportiert wird. Zumindest die in der Gutüberleiteinrichtung durch das heiße Gut hindurchgeblasene Kühlluft soll im allgemeinen als erhitzte Verbrennungsluft (Sekundärluft, Tertiärluft) in dem vorgeschalteten Ofensystem wieder- bzw. weiterverwendet werden.

Bei einer bekannten Kühlvorrichtung zur Kühlung von heißem Zementklinker (Zeitschrift "Zement-Kalk-Gips" Nr, 2/1985, Seiten 87 bis 90) besteht die einem konventionellen Schubrostkühler vorgeschaltete Gutüberleiteinrichtung aus einem einzigen, mit pulsierender Kühlluft beaufschlagbaren Treppenrost, dessen Neigungswinkel kleiner ist als der natürliche Böschungswinkel des aus dem Brennofen austretenden heißen Zementklinkers, so daß auf dem Treppenrost eine Gutschicht liegen bleibt, auf deren Oberfläche das frische zu kühlende Gutmaterial in Richtung zum konventionellen Rostkühler nachrutschen soll. Dabei soll das frische Zementklinkerbett auf der einzigen Böschung der Gutüberleiteinrichtung immer dann nachrutschen, wenn das Bett auf dem nachgeschalteten Schubrostkühler vorgeschoben wird. Mit der bekannten Gutüberleiteinrichtung gelingt es aber nicht wirkungsvoll, das frische Klinkerbett auch quer zur Hauptförderrichtung zu verteilen, was für einen guten Wärmeübergang zwischen dem heißen Zementklinker und der Kühlluft notwendig wäre. Wird der einzige Treppenrost der bekannten Gutüberleiteinrichtung sehr lang ausgebildet, ist die Gefahr nicht ausgeschlossen, daß sich das frische Klinkerbett auf dem Treppenrost nicht mehr halten kann, was eine zu niedrige Klinkerbetthöhe, eine zu kurze Verweilzeit der Kühlluft im Klinkerbett und dessen ungenügende Kühlung zur Folge haben würde. Sofern die Oberfläche des heißen frischen Klinkerbettes mangels zonenweise nicht ausreichender Kühlung verkrusten sollte, wobei Verkrustungen an der Schüttgutoberfläche den Kühlluftdurchtritt behindern würden, so wäre bei der bekannten Kühlvorrichtung nicht dafür Sorge getragen, daß solche Verkrustungen möglichst sofort nach ihrer Entstehung wieder zerstört werden.

Aus der EP-A-0 219 745 ist eine einem Wanderrost zum Abkühlen von heißem Zementklinker vorgeschaltete mit Kühlluft beaufschlagbare Gutüberleiteinrichtung bekannt, die aus einem zur Horizontalen schräg geneigten Treppenrost mit dachförmig ausgebildeten Tragelementen besteht. Auf dieser bekannten Gutüberleiteinrichtung kommt nur eine einzige lange Gutböschungsstrecke zustande, bei der eine Rückstauwirkung für das frische heiße abzukühlende Gut nicht möglich ist bzw. mit zunehmender Hangabtriebskraft verloren geht, wodurch z. B. kugelförmige Zementklinkerbrocken in unerwünschter Weise bis an das Böschungsende herabrollen. An diesem Ergebnis ändert sich auch nichts, wenn in den geneigten Treppenrost ein Drehstempelgebilde eingebaut ist, das nach Art eines Stößels Gutanbackungen am Treppenrost vermeiden soll, weil auch dann der bewegte Stößel nur auf die untere abgekühlte Schüttgutschicht einwirkt, nicht aber auf die obere frische zu kühlende Schüttgutschicht, d. h. trotz Einbaus des pendelnden bzw. schubartig bewegten Stößel-Elementes in den geneigten Treppenrost bleibt die einzige lange durchgehende Gutböschungsstrecke über der bekannten Gutüberleiteinrichtung erhalten.

Der Erfindung liegt die Aufgabe zugrunde, eine Vorrichtung der eingangs genannten Art mit einer verbesserten Gutüberleiteinrichtung zu schaffen, die bei geringem technischen Aufwand eine wirkungsvolle Gutverteilung auch quer zur Förderrichtung, ein sicheres Aufbrechen etwa auf dem Schüttgutbett sich bildender Gutverkrustungen sowie weitere Vorteile bietet und die schließlich insgesamt eine erhöhte Wärmerückgewinnung bzw. Wärmerekuperation aus der Klinkerwärme zurück in das Ofensystem und damit eine weitere Absenkung des spezifischen Wärmebedarfs einer gesamten Zementklinkerproduktionslinie ermöglicht.

Diese Aufgabe wird mit den Maßnahmen des Kennzeichnungsteils des Anspruchs 1 gelöst. Vorteilhafte Weiterbildungen sind in den Unteransprüche angegeben.

Bei der erfindungsgemäßen Vorrichtung ist die Gutüberleiteinrichtung zwischen Ofenaustrag und dem eigentlichen Kühler wie Schubrostkühler, Bandrostkühler, Rohrkühler oder dergleichen aus drei Längsabschnitten zusammengesetzt, von denen der erste Abschnitt einen nicht bewegten geneigten Treppenrost, der mittlere Abschnitt einen Schubrost und der dritte Abschnitt wieder einen nicht bewegten geneigten Treppenrost aufweist, wobei alle drei Abschnitte von unten mit Kühlgas (in der Regel Kühlluft) beaufschlagt werden. Der im mittleren Abschnitt befindliche Schubrost der Gutüberleiteinrichtung ist vergleichsweise kurz ausgebildet und er weist bis zu fünf Rostplattenreihen auf, von denen wenigstens eine mittlere Rostplattenreihe, jedoch nicht mehr als drei Reihen beweglich angeordnet sind. Die Ebene dieses vergleichsweise kurzen Schubrostes des mittleren Abschnitts der Gutüberleiteinrichtung liegt horizontal oder ist in Förderrichtung nur leicht geneigt. Das heißt, der Schubrost des mittleren Abschnitts vermittelt dem darauf befindlichen Schüttgut nur eine vergleichsweise niedrige Fördergeschwindigkeit, wodurch die Gutbetthöhe vergleichsweise groß gehalten wird, was eine lange Verweilzeit des Kühlgases im Gutbett zur Folge hat, welches sich infolgedessen durch das Kühlgas gut abkühlen kann.

Während der feststehende geneigte Treppenrost des ersten Abschnitts der Gutüberleiteinrichtung der erfindungsgemäßen Vorrichtung etwa fünf bis sechs Stufen bzw. Rostplattenreihen aufweist, weist der weitere geneigte feststehende Treppenrost des dritten Abschnitts nur bis zu vier Stufen bzw. Rostplattenreihen auf. Der Anfang des Treppenrosts dieses dritten Abschnitts liegt durch einen hohen Absatz bzw. durch eine hohe Stufe tiefer als das Ende des kurzen Schubrostes des mittleren Abschnitts. An den geneigten Treppenrost des dritten Abschnitts der Gutüberleiteinrichtung schließt sich dann ein normaler Kühler, insbesondere Schubrostkühler an. Der kurze Schubrost des mittleren Abschnitts kann zweckmäßigerweise mit der Schubantriebseinheit des sich an den dritten Abschnitt anschließenden normalen Schubrostkühlers verbunden sein.

Der Vorteil der erfindungsgemäßen Vorrichtung besteht im wesentlichen darin, daß durch die Anordnung von zwei voneinander getrennten nicht bewegten geneigten Treppenrosten, getrennt durch den vergleichsweise kurzen Schubrost des mittleren Abschnitts, zur Verbesserung der Wärmeübertragung zwischen. dem heißen Schüttgut und der Kühlluft große Schütthöhen und eine gute Querverteilung des Schüttgutes ermöglicht werden, da über die zwei relativ kurzen voneinander getrennten Böschungsstrecken in Verbindung mit dem zwischengeschalteten kurzen Schubrost ein sicherer Rückstau des Schüttgutes erzielt wird. Dagegen wäre mit einem durchgehenden Treppenrost (z. B. gezeigt und beschrieben in der oben erwähnten Fachzeitschrift "Zement-Kalk-Gips") mit einer Gesamtlänge der beiden beim Erfindungsgegenstand getrennten Treppenroste die gewünschte große Schütthöhe des frischen heißen Aufgabegutes nicht erreichbar, da über die lange Böschungsstrecke die nötige Rückstauwirkung für das frische Gut verloren geht, was zu kurze Verweilzeiten der Kühlluft im Gutbett sowie eine verschlechterte Wärmeübertragung zur Folge haben würde. Außerdem würden bei einem einzigen langen durchgehenden geneigten Treppenrost in der Gutüberleiteinrichtung kugelförmige Ansatzstücke bzw.-Sinterbrocken bis an das Böschungsende herabrollen. Diese Sinterbrocken werden dagegen bei der erfindungsgemäßen Vorrichtung im mittleren Abschnitt der Gutüberleiteinrichtung auf der praktisch ebenen Schüttgutoberfläche über dem kurzen Schubrost dieses mittleren Abschnitts abgebremst und von dort langsam weitertransportiert.

Bei der erfindungsgemäßen Vorrichtung sind die beiden voneinander getrennten nicht bewegten geneigten Treppenroste der Gutüberleiteinrichtung vor thermischem und abrasivem Verschleiß weitestgehend geschützt, weil der Neigungswinkel dieser beiden Treppenroste kleiner ist als der natürliche Böschungswinkel des Schüttgutes, so daß unterhalb einer bestimmten Trennlinie (Scherfläche) das Schüttgut im abgekühlten Zustand auf beiden Treppenrosten liegenbleibt und als autogener Verschleißschutz für das darüber abrutschende frische Schüttgutmaterial wirkt. Ein nennenswerter Rostplattenverschleiß ist daher nur noch beim kurzen Schubrost des mittleren Abschnitts der Gutüberleiteinrichtung zu erwarten. Die darin enthaltenen Rostplatten sind aber im Vergleich zu den Rostplatten der nicht bewegten geneigten Treppenroste wesentlich einfacher ausgebildet und sie lassen sich auch leichter austauschen, was beides kostensenkend wirkt.

Die Verbesserung bei der Verteilung des Schüttgutes quer zur Förderrichtung wird im wesentlichen mit der zweifachen Rückstauwirkung der zwei voneinander getrennten geneigten Treppenroste durch Vermeidung eines in Hauptförderrichtung zu schnellen Abfließens der angeböschten oberen frischen Schüttgutschicht erreicht, d. h. die beiden voneinander getrennten nicht bewegten geneigten Treppenroste nicht zu großer Länge bzw. die darauf jeweils liegen bleibenden Gutschichten sind in der Lage, die oberen Schüttgutschichten zu stabilisieren.

Die höchste Temperatur der frischen Schüttgutschicht, z. B. glühend heißer Zementklinker, wird an deren Oberfläche auftreten. Dort können die Gutteilchen fritten bzw. verkleben bzw. verkrusten. Oberflächenverkrustungen würden aber den Durchtritt von Kühlluft und damit die Abkühlung des Schüttgutes behindern. Mögliche Verkrustungen auf der Schüttgutoberfläche werden erfindungsgemäß an einem scharfen Übergang vom kurzen Schubrost des mittleren Abschnitts zum geneigten Treppenrost des dritten Längsabschnitts bei der erfindungsgemäßen Vorrichtung aufgebrochen, erzwungen durch einen hohen Absatz bzw. eine hohe Stufe zwischen dem Ende des kurzen Schubrosts des mittleren Abschnittes und dem Beginn des Treppenrostes des dritten Abschnittes der Gutüberleiteinrichtung, und damit wird die notwendige Luftdurchlässigkeit in der zu kühlenden Gutschicht wieder erreicht.

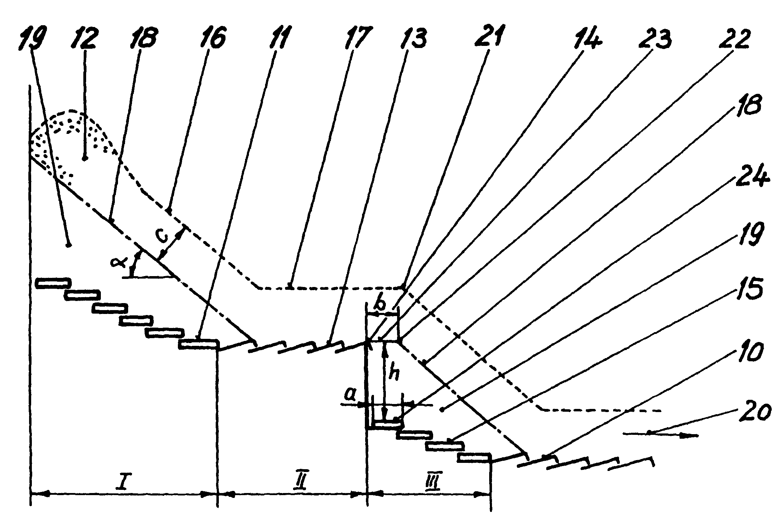

Die Erfindung und deren weitere Merkmale und Vorteile werden anhand des in der Zeichnung schematisch dargestellten Ausführungsbeispieles näher erläutert.

Die Zeichnung zeigt schematisch einen Längsschnitt durch die erfindungsgemäße Vorrichtung am Beispiel der Kühlung von aus einem Drehrohrofen ausgetragenen glühend heißen Zementklinker. Im Bereich unterhalb des Ofenauslaufs ist eine von unten mit Kühlluft beaufschlagbare Gutüberleiteinrichtung angeordnet, an die sich ein das zu kühlende Gut tragender und weiterfördernder Schubrostkühler (10) üblicher Bauart anschließt. Die Gutüberleiteinrichtung ist in drei Längsabschnitte (I, II, II) unterteilt, die mit unterschiedlichen Rosten ausgestattet sind. Im ersten Abschnitt (I) ist eine nicht bewegter geneigter Treppenrost (11) angeordnet, mit einem Neigungswinkel von z. B. 20°, der kleiner ist als der natürliche Böschungswinkel (α) des frischen Schüttgutes (12) (heißer Zementklinker) von z. B. 35°. An den Treppenrost (11) des ersten Abschnitts (I) schließt sich im zweiten Abschnitt (II) ein kurzer Schubrost (13) an, an dessen Ende (14) über eine hohe nach unten führende Stufe mit der Höhe (h) sich ein weiterer nicht bewegter geneigter Treppenrost (15) des Abschnitts (III) anschließt, an welchen sich dann schließlich der normale Schubrostkühler (10) anschließt.

Die Anordnung der zwei voneinander getrennten Treppenroste (11) und (15) ermöglicht große Schütthöhen (c) des frischen Aufgabegutes (12) zur Verbesserung der Wärmeübertragung, da über die relativ kurzen Böschungsstrecken noch ein sicherer Rückstau des frischen Aufgabeguts (12) erzielt wird. Auf der Schüttgut-Böschungsoberfläche (16) herabrollende Ansatzstücke und Sinterbrocken werden auf der flachen Schüttgutoberfläche (17) des mittleren Abschnitts (II) der Gutüberleiteinrichtung abgebremst und von dort langsam weitertransportiert. Beide Treppenroste (11) und (15) sind vor thermischem und abrasivem Verschleiß autogen geschützt, da unterhalb der strichpunktiert angezeigten Trennlinie bzw. Scherfläche (18) das Schüttgut (12) nicht bewegt wird und im abgekühlten Zustand als bleibende Gutschicht (19) auf den Treppenrosten (11) und (15) liegenbleibt. Ein Rostplattenverschleiß ist nur noch im Abschnitt (II) des kurzen Schubrostes (13) zu erwarten. Die darin eingebauten Rostplatten sind im Vergleich zu den Rostplatten der Treppenroste (11) und (15) wesentlich einfacher und sie lassen sich auch leichter austauschen. Eine Verbesserung bei der Verteilung des frischen Schüttgutes (12) quer zur Förderrichtung (20) wird im wesentlichen mit dem zweifachen Gutrückstau der zwei voneinander getrennten Treppenroste (11) und (15) durch Vermeidung eines zu schnellen Abfließens der angeböschten Schütthöhe mit der Höhe (c) erreicht. Eine zusätzliche Gutquerverteilung wird auch durch den vergleichsweise kurzen Schubrost (13) des mittleren Abschnitts (II) der Gutüberleiteinrichtung begünstigt.

Mögliche Verkrustungen auf der Schüttgutoberfläche (17) werden am scharfen Übergang (21) vom kurzen Schubrost (13) zum geneigten Treppenrost (15) wirkungsvoll aufgebrochen und damit wird die notwendige Luftdurchlässigkeit in der Kühlgutschicht wieder hergestellt.

Wie aus der Zeichnung noch hervorgeht, liegt der Abstand (b) des Schnittpunkts (22) zwischen der strichpunktiert gezeichneten Trennlinie (18) und der Systemlinie (23) des Schubrosts (13) des Längsabschnitts (II) vom Ende (14) des Schubrosts (13) im Bereich a ≧ b ≧ 0,5a. wobei das Maß (a) der Breite einer Stufe (24) des geneigten Treppenrostes (15) des Längsabschnitts (III) entspricht.

Wird die erfindungsgemäße Vorrichtung als Kühler z. B. für geröstete Erze verwendet, so kann statt Kühlluft auch z. B. ein sauerstoffarmes Kühlgas verwendet werden. Prinzipiell ist die erfindungsgemäße Vorrichtung auch bei Einrichtungen zur Trocknung und/oder Verbrennung von Schüttgütern verwendbar.

## Patentansprüche

1. Vorrichtung zur Kühlung von aus einem Brennofen austretenden heißen Zementklinker, mit einer im Bereich unterhalb des Ofenauslaufs angeordneten mit Kühlgas beaufschlagbaren Gutüberleiteinrichtung, an die sich ein das zu kühlende Gut tragender und weiterfördernder Rostkühler (10) anschließt, wobei die Gutüberleiteinrichtung aus drei Längsabschnitten (I, II, III) zusammengesetzt ist, von denen der erste Abschnitt (I) einen nicht bewegten zur Horizontalen geneigten Treppenrost (11), der mittlere Abschnitt (II) einen bewegten Rost (13) und der dritte Abschnitt (III) wieder einen nicht bewegten zur Horizontalen geneigten Treppenrost (15) aufweist, **gekennzeichnet durch** folgende Merkmale:
a) der Neigungswinkel der beiden voneinander getrennten Treppenroste (11 und 15) zur Horizontalen ist so eingestellt, dass sich auf den Treppenrosten (11 und 15) jeweils eine ruhende bleibende abgekühlte Gutschicht (19) bildet;
b) der bewegte Rost des mittleren Längsabschnitts (II) ist ein bis zu fünf Rostplattenreihen aufweisender Schubrost (13), dessen Ebene horizontal liegt oder in Förderrichtung (20) nur leicht geneigt ist;
c) der Anfang des Treppenrostes (15) des dritten Längsabschnittes (III) liegt **durch** eine hohe nach unten führende Stufe mit der Höhe (h) tiefer als das Ende (14) des Schubrostes (13) des Längsabschnittes (II);
d) die Länge des mittleren Längsabschnitts (II) mit dem Schubrost (13), welcher die beiden Treppenroste (11 und 15) voneinander trennt, und die Stufenhöhe (h) sind so, dass die auf den getrennten Treppenrosten (11 und 15) ruhenden abgekühlten Gutschichten (19) zwei bleibende voneinander getrennte Böschungsstrecken bzw. Scherflächen (18) bilden, über welche die frische zu kühlende Schüttgutschicht (12) abrutscht, die im mittleren Längsabschnitt (II) am Schubrost (13) rückgestaut wird und in diesem Abschnitt (II) eine flache Schüttgutoberfläche (17) bildet.

2. Vorrichtung nach Anspruch 1,
**dadurch gekennzeichnet, dass** auf der flachen Schüttgutoberfläche (17) vom mittleren Längsabschnitt (II) zum Treppenrost (15) des dritten Längsabschnittes (III) ein scharfer Übergang (21) mit Aufbrechen von Schüttgutoberflächen-Verkrustungen gebildet ist.

3. Vorrichtung nach Anspruch 1,
**dadurch gekennzeichnet, dass** der Abstand (b) des Schnittpunktes (22) zwischen der Scherfläche bzw. Trennlinie (18) und der Systemlinie (23) des Schubrostes (13) des Längsabschnittes (II) vom Ende (14) des Schubrostes (13) etwa im Bereich a ≧ b ≧ 0,5a liegt, wobei das Maß (a) der Breite einer Stufe (24) des geneigten Treppenrostes (15) des Längsabschnittes (III) entspricht.

4. Vorrichtung nach Anspruch 1,
**dadurch gekennzeichnet, dass** der Schubrost (13) des Abschnitts (II) mit der Schubantriebseinheit des sich an den Abschnitt (III) anschließenden Schubrostes (10) verbunden ist.

## Claims

1. Mechanism for cooling hot cement clinker emerging from a calcining furnace including a materials transfer device which is arranged beneath the furnace outlet, can be acted on by cooling gas and is adjoined by a grate cooler (10) which carry and convey onwards the material to be cooled, the materials transfer device being composed of three longitudinal sections (I, II, III), of which the first section (I) has an immobile stepped grate (11) inclined relative to the horizontal, the middle section (II) has a mobile grate (13) and the third section (III) once again has an immobile stepped grate (15) inclined relative to the horizontal, **characterized by** the following features:
a) the angle of slope of the two separate stepped grates (11 and 15) relative to the horizontal is set in such a way that a stationary, permanent cooled layer of material (19) is formed on each of the stepped grates (11 and 15);
b) the mobile grate of the middle longitudinal section (II) is a reciprocating grate (13) which includes up to five rows of grate plates and the plane of which lies horizontally or is only slightly inclined in the conveying direction (20);
c) on account of a high step leading downwards, of height (h), the start of the stepped grate (15) of the third longitudinal section (III) is at a lower level than the end (14) of the reciprocating grate (13) of the longitudinal section (II);
d) the length of the middle longitudinal section (II) comprising the reciprocating grate (13), which separates the two stepped grates (11 and 15) from one another, and the step height (h) are such that the cooled layers of material (19) resting on the separate stepped grates (11 and 15) form two permanent slope sections or shearing surfaces (18) which are separate from one another and along which the fresh layer of bulk material (12) which is to be cooled slides down before building up at the reciprocating grate (13) in the middle longitudinal section (II) and forming a flat bulk material surface (17) in this section (II).

2. Mechanism according to Claim 1, **characterized in that** a sudden transition (21), breaking up encrustations at the bulk material surface, is formed on the flat bulk material surface (17) from the middle longitudinal section (II) to the stepped grate (15) of the third longitudinal section (III).

3. Mechanism according to Claim 1, **characterized in that** the distance (b) from the point of intersection (22) between the shearing surface or parting line (18) and the system line (23) of the reciprocating grate (13) of the longitudinal section (II) to the end (14) of the reciprocating grate (13) is approximately in the range a ≧ b ≧ 0.5a, where the dimension (a) corresponds to the width of one step (24) of the sloping stepped grate (15) of the longitudinal section (III).

4. Mechanism according to Claim 1, **characterized in that** the reciprocating grate (13) of section (II) is connected to the reciprocating drive unit of the reciprocating grate (10) which adjoins section (III).

## Revendications

1. Dispositif pour le refroidissement de clinker brûlant sortant d'un four de calcination, avec une installation de transport de produit disposée dans la zone qui se trouve en dessous de la sortie du four et qui peut être alimentée en gaz de refroidissement, à laquelle se raccorde un refroidisseur à grille (10) supportant le produit à refroidir et le transportant plus loin,
l'installation de transport de produit étant composée de trois sections longitudinales (I, II, III), parmi lesquelles la première section présente une grille à gradins (11) inclinée par rapport à l'horizontale, non mobile, la section centrale (11) présente une grille mobile (13) et la troisième section (III) présente à nouveau une grille à gradins (15) inclinée, par rapport à l'horizontale, non mobile,
**caractérisé par** les spécifications suivantes :
a) l'angle d'inclinaison des deux grilles à gradins (11 et 15) séparées l'une de l'autre est réglé par rapport à l'horizontale de manière à former une couche de matériau (19) refroidie restant calmement sur chaque grille (11 et 15),
b) la grille mobile (13) de la section longitudinale médiane (II) est une grille poussante (13) comprenant une à cinq séries de plaques de grilles et dont le plan est horizontal ou légèrement incliné dans le sens du transport (20),
c) le début de la grille à gradins (15) de la troisième section (III), du fait d'un gradin élevé conduisant vers le bas et ayant une hauteur (h) se trouve plus bas que l'extrémité (14) de la grille poussante (13) de la section (II),
d) la longueur de la section médiane (II) avec la grille poussante (13) qui sépare les deux grilles à gradins (11 et 15), et la hauteur de gradin (h) sont telles que les couches de matériau (19) refroidies calmement sur les grilles séparées (11 et 15) forment deux talus ou surfaces de soc (18) séparées en permanence qui arrasent la couche de vrac (12) fraîche à refroidir en la retournant sur la grille poussante (13) dans la section médiane (II) pour former dans cette section (II) une surface de vrac plane (17).

2. Dispositif selon la revendication 1,
**caractérisé en ce que**
la surface plane de matériau en vrac (17) comporte une transition (21) abrupte avec bris des croûtes de surface, partant de la section médiane (II) et allant jusqu'à la grille à gradins (15) de la troisième section (III).

3. Dispositif selon la revendication 1,
**caractérisé en ce que**
la distance (b) du point d'intersection (22) entre la surface de soc ou la ligne de séparation (18) et la ligne (23) de la grille poussante (13) de la section longitudinale (II) à partir de l'extrémité (14) de la grille poussante (13) se trouve comprise à peu près dans la zone a ≥ b ≥ 0,5a, (a) correspondant à la largeur d'un gradin (24) de la grille à gradins (15) inclinée de la section longitudinale (III).

4. Dispositif selon la revendication 1,
**caractérisé en ce que**
la grille poussante (13) de la section (II) est reliée à l'unité d'entraînement de la grille poussante (10) raccordée à la section (III).
